# EUROPÄISCHE PATENTSCHRIFT

(11) **EP 0 483 318 B1**
(45) Veröffentlichungstag und Bekanntmachung des Hinweises auf die Patenterteilung: **18.10.1995**
(21) Anmeldenummer: 91909061.3
(22) Anmeldetag: 10.05.1991
(51) Int. Cl.: F16B 39/22, F16B 25/00, F16B 33/06

(54) **SELBSTSICHERNDE, GEWINDEFURCHENDE SCHRAUBE**
SELF-LOCKING TAPPING SCREW
VIS TARAUDEUSE INDESSERRABLE

(30) Priorität: 16.05.1990 DE 4015771; 16.05.1990 DE 4015772
(43) Veröffentlichungstag der Anmeldung: 06.05.1992
(73) Patentinhaber: SFS Industrie Holding AG, 9435 Heerbrugg (CH)
(72) Erfinder: HANGARTNER, Elmar, CH-9436 Balgach (CH)
(74) Vertreter: Ludescher, Hans
(86) Internationale Anmeldenummer: EP9100873
(87) Internationale Veröffentlichungsnummer: WO9118215

(56) Entgegenhaltungen:
- DE-A- 2 049 255
- US-A- 4 657 460
- US-A- 4 681 222
- RESEARCH DISCLOSURE, Nr. 301, Mai 1989, Zusammenfassung Nr. 301117, (New York, US), "A thread adhesive for screws installed into plastics", siehe den ganzen Artikel
- "Industrial fasteners handbook", 3, Ausgabe, 1987, Seiten 228-234, Trade and Technical Press Ltd, (Morden, GB), " Vibration resistant bolts", siehe Seite 230, Tabelle 1, "Taptite"; Seite 231, Tabelle 1 (contd.), "Dri-loc".

## Beschreibung

Die Erfindung betrifft eine gewindefurchende Schraube zum Eindrehen in vorgefertigte, also z.B. vorgebohrte, vorgegossene oder vorgestanzte Löcher in einem Werkstück.

Beim Einsatz gewindefurchender Schrauben ging man bisher davon aus, daß durch die Gewindeform an der Schraube und das von der Schraube selbst in den Löchern des Werkstückes gebildete Innengewinde eine derart enge Passung vorgegeben sei, daß weitere Maßnahmen zur Sicherung gegen ein Losdrehen nicht erforderlich wären. Außerdem war die Fachwelt der Ansicht, daß eine Abdichtung solcher Schraubverbindungen infolge der praktisch auf Null reduzierten Toleranzen zwischen Schraubengewinde und Innengewinde im Werkstück entweder nicht erforderlich oder aber nicht realisierbar sei. Dies geht auch aus den Darstellungen und Erläuterungen zur US-A-4 657 460 hervor.

Die Erfindung hat sich daher zur Aufgabe gestellt, eine gewindefurchende Schraube zu schaffen, mit der die Losdrehsicherheit verbessert werden kann und eine dichte Schraubverbindung erzielbar ist.

Zur Lösung dieser Aufgabe wird erfindungsgemäß vorgeschlagen, daß die gewindefurchende Schraube einen unrunden, z.B. trilobularen, mehreckigen oder nach Art eines Gleichdicks ausgeführten Querschnitt aufweist und mit einer zumindest einen Teil der Gewindeoberfläche bedeckenden Klebstoffbeschichtung versehen ist.

Es hat sich bei Versuchen gezeigt, daß entgegen der allgemeinen Ansicht der Fachwelt eine auf die Gewindeoberfläche aufgebrachte Klebstoffbeschichtung auch bei gewindefurchenden Schrauben einsetzbar ist und eine optimale Wirkung mit sich bringt, wenn eben diese gewindefurchende Schraube einen unrunden Querschnitt aufweist. Obwohl das Gewinde in den Löchern durch die Schraube selbst hergestellt wird und die Gewindeflanken von Schraube und Innengewinde demnach satt aneinander anliegen, wird durch die Klebstoffbeschichtung ein mikrofeiner Film zwischen Schraube und Bohrungswandung eingezogen, so daß eine effektive Losdrehsicherheit und eine dichte Verbindung gewährleistet werden kann.

Obwohl es bei Schrauben zum Eindrehen in Kunststoffbauteile bekannt ist [Research Disclosure, No. 301, May 1989, Zusammenfassung No. 30 11 17, (New York, US)] ein Klebemittel aufzubringen, ging es auch dort um das Problem des Abstreifens des Klebstoffes beim Eindrehen. Auch bei dünnem Klebstoffauftrag kann bei zylindrischem Gewindeschaft das Abstreifen nicht verhindert werden.

Gewindefurchende Schrauben nach DIN 7500 wurden bisher nicht für dichte Verbindungen eingesetzt, und andererseits wurden Schrauben mit klebender Beschichtung nach DIN 267, Teil 27, nur dort eingesetzt, wo Löcher mit vorgefertigtem Innengewinde bzw. entsprechende Muttern vorgesehen waren. Auf dem Befestigungssektor mußte also ein Vorurteil der Fachwelt überwunden werden, um überhaupt die Möglichkeit zu erörtern, auf gewindefurchenden Schrauben klebende Beschichtungen vorzusehen.

Beim Eindrehen einer gewindefurchenden Schraube kann sich die Klebstoffbeschichtung in gewissen Fällen sogar einem Schmiermittel entsprechend verhalten, um dadurch die Gewindeherstellung zu verbessern und das Einschraubdrehmoment zu verringern. Es ist auf jeden Fall dafür gesorgt, daß auf der gesamten Gewindeoberfläche zumindest über einen Teilbereich der Länge des Gewindeabschnittes ein Klebstoffilm erzeugt wird, der die Losdrehsicherheit für solche gewindefurchenden Schrauben wesentlich erhöht und außerdem eine optimale Abdichtung der Schraubverbindung gewährleistet.

Da die erfindungsgemäßen Maßnahmen eben eine gewindefurchende Schraube mit einem unrunden, z.B. trilobularen, mehreckigen oder nach Art eines Gleichdicks ausgeführten Querschnitt vorsehen, wird der Klebstoff praktisch immer wieder in dem mit geringerer Gewindehöhe ausgeführten Bereich angesammelt und ständig in Form eines dünnen Filmes auf den ganzen Gewindeumfang weitergezogen.

Je nach Einsatzzweck einer solchen gewindefurchenden Schraube und je nach dem Material, in welches diese Schraube eingedreht werden soll, bestehen verschiedene Möglichkeiten zum Auftragen der Klebstoffbeschichtung. So ist es denkbar, daß die Klebstoffbeschichtung streifenförmig achsparallel auf den Gewindebereich aufgebracht ist. Es kann aber auch vorgesehen werden, daß die Klebstoffbeschichtung in mehreren, mit Abstand aufeinander folgenden, streifenförmigen, achsparallel verlaufenden Abschnitten aufgetragen ist.

Eine weitere Variante ist darin gelegen, daß die Klebstoffbeschichtung in Form eines ringförmigen Einzelabschnittes oder in Form mehrerer, in axialer Richtung mit Abstand aufeinander folgender Ringabschnitte auf den Gewindebereich aufgebracht ist. Obwohl die Klebstoffbeschichtung in der streifenförmigen Anordnung in achsparalleler Ausrichtung nicht umfangsgeschlossen auf einem Gewindeabschnitt vorgesehen ist, wird durch die besondere Ausbildung der gewindefurchenden Schrauben gewährleistet, dass bei der Herstellung des Innengewindes im Loch des Werkstückes ein dünner Film von Klebstoff mitgezogen und umfangsgeschlossen verteilt wird.

Weiters wird vorgeschlagen, dass die Klebstoffbeschichtung aus einem mikroverkapselten Klebstoff besteht. Zur Sicherung und Dichtung von Schraubverbindungen zwischen einer gewindefurchenden Schraube und dem in ein Loch eines Werkstückes eingefurchten Gewinde erfüllen die mit mikroverkapseltem Flüssigkleber vorbeschichteten Gewindebereiche höchste Anforderungen zur Erhaltung der Vorspannkraft auch unter dynamischer Beanspruchung quer zur Schraubenachse. Die Mikroverkapselung ist ein physikalisch-chemisches Verfahren, welches aushärtenden Flüssigkunststoff in kleinen Kapseln einschliesst. Beim Einschrauben und somit beim Einfurchen des Gewindes im Werkstück platzen die Mikrokapseln auf, wodurch der Flüssigkunststoff freigesetzt wird und durch Reaktion mit der zweiten Komponente, einem Härter, eine ausgezeichnete Klebverbindung entsteht. Es wird somit die Losdrehsicherheit garantiert. Die erfindungsgemäss ausgebildete, gewindefurchende Schraube ist bereits nach wenigen Stunden gegen selbsttätiges Lösen gut gesichert und dichtet gegen viele Medien einwandfrei ab.

Es ist im Rahmen der Erfindung durchaus möglich, andere Klebstoffbeschichtungen vorzusehen, insbesondere können auch flüssige Klebstoffe unmittelbar vor dem Eindrehen der Schraube aufgebracht werden, doch ist gerade mit der Klebstoffbeschichtung in Form mikroverkapselten Klebstoffes eine optimale Fertigbearbeitung der Schrauben mit langer Lagerfähigkeit vor dem Eindrehen gewährleistet.

Weitere erfindungsgemässe Merkmale und besondere Vorteile werden in der nachstehenden Beschreibung anhand der Zeichnung noch näher erläutert. Es zeigen:

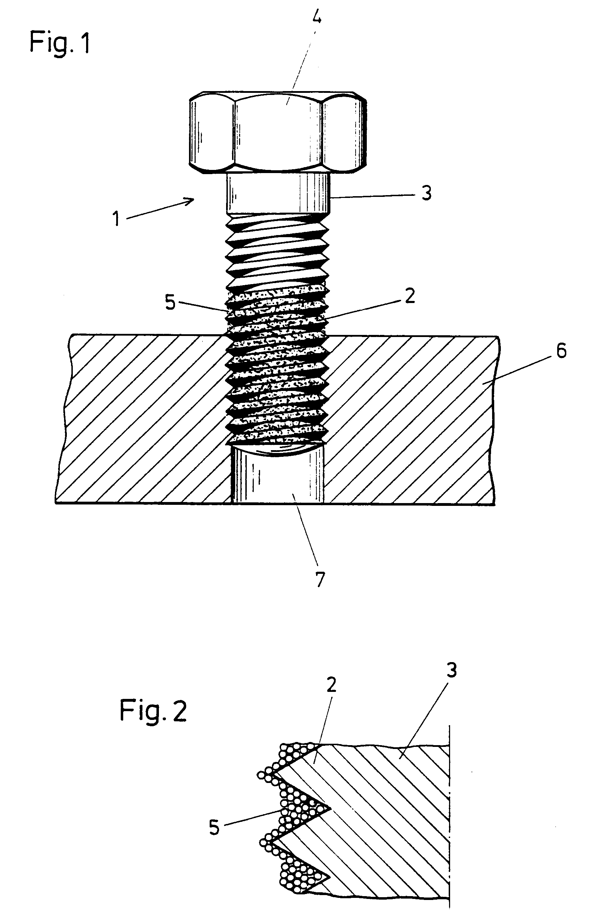

- Fig. 1: eine gewindefurchende Schraube, welche bereits zum Teil in ein Loch eines Werkstückes eingedreht ist;
- Fig. 2: vergrössert dargestellt einen Teilabschnitt des Gewindebereiches der gewindefurchenden Schraube.

Die gewindefurchende Schraube 1 besteht aus einem mit einem Gewindeabschnitt 2 ausgebildeten Schaft 3 und einem Schraubenkopf 4. Es wurde hier ein Sechskantkopf dargestellt. Die erfindungsgemässen Massnahmen eignen sich aber nicht nur für Schrauben mit Sechskantkopf, sondern für alle Schrauben mit gewindefurchendem Schaftabschnitt, wobei auch Stiftschrauben, also Schrauben ohne Kopf, oder aber Schrauben mit verschiedensten Köpfen oder Flanschen je nach Einsatzzweck vorgesehen werden können.

Die gewindefurchende Schraube 1 ist mit einer zumindest einen Teil der Gewindeoberfläche bedeckenden Klebstoffbeschichtung 5 versehen. Vorteilhaft ist diese Klebstoffbeschichtung aus einem mikroverkapselten Klebstoff gebildet, welcher bereits an der Fertigungsstätte der Schraube aufgebracht werden kann.

Gewindefurchende Schrauben weisen in der Regel einen unrunden Querschnitt, z.B. einen trilobularen, mehreckigen oder nach Art eines Gleichdicks ausgeführten Querschnitt, auf. Es sind aber auch gewindefurchende Schrauben dieser Art bekannt, welche über deren Länge, also annähernd achsparallel verlaufende Schlitze oder Einkerbungen aufweisen und somit ebenfalls als gewindefurchende Schrauben zu bezeichnen sind.

Die Klebstoftbeschichtung 5 kann auf verschiedene Art und Weise auf den Gewindebereich der gewindefurchenden Schraube 1 aufgebracht werden. So ist es möglich, die Klebstoffbeschichtung streifenförmig achsparallel auf den Gewindebereich aufzubringen oder aber es können mehrere, mit Abstand aufeinander folgende, streifenförmige und achsparallel verlaufende Abschnitte aufgetragen werden. Es ist aber auch möglich, die Klebstoffbeschichtung in Form eines ringförmigen Einzelabschnittes oder in Form mehrerer, in axialer Richtung mit Abstand aufeinander folgender Ringabschnitte auf den Gewindebereich aufzubringen. Natürlich kann die Klebstoffbeschichtung auch über den ganzen Gewindebereich des Schaftes 3 der gewindefurchenden Schraube 1 aufgetragen werden. Es kann dann aber vorkommen, dass zuviel Klebstoffmaterial vorhanden ist, da zwischen dem Innengewinde im Werkstück 6 und dem Gewinde der Schraube praktisch kein Spiel vorhanden ist und nur ein mikrofeiner Film miteingezogen und somit umfangsgeschlossen aufgetragen werden kann.

Durch die vorliegende Erfindung ist also die Möglichkeit geschaffen worden und es sind auch die Wirkungen erkannt worden, die sich bei einer Klebstoffbeschichtung einer gewindefurchenden Schraube ergeben. Es ist daher erstmals die Möglichkeit geschaffen worden, gewindefurchende Schrauben entsprechend losdrehsicher zu verankern und ferner diese Schraubverbindung optimal abzudichten.

Die gewindefurchende Schraube wird in vorgefertigte Löcher 7 eingedreht. Die Löcher können also z.B. vorgebohrt, vorgegossen oder vorgestanzt sein.

Die erfindungsgemässen Massnahmen sind auch bei umgekehrter Konstruktion einsetzbar, also wenn die gewindefurchende Schraube eine zumindest annähernde Zylinderform aufweist und die Löcher 7 im Werkstück 6 eine unrunde, z.B. eine trilobulare, mehreckige oder nach Art eines Gleichdicks ausgeführte Querschnittsform haben.

Die erfindungsgemässen Massnahmen eignen sich gleichermassen beim Eindrehen der gewindefurchenden Schrauben in Metall oder in Kunststoff. So ist es auch denkbar, dass allein durch das Eindrehen des Gewindeendes eines schraubenförmigen Metallteils in eine Oeffnung in einem Kunststoff-Spritzteil im Zusammenwirken mit dem Klebstoff, mit dem das Gewindeende des Metallteils beschichtet ist, eine derart gute Verbindung zwischen dem Metallteil und dem Kunststoff-Spritzteil erzielt wird, dass der Bauteil die für spezielle Einsätze erforderlichen Drehmomente, Biegebelastungen sowie Zug- und Druckkräfte aufnehmen kann.

## Patentansprüche

1. Gewindefurchende Schraube zum Eindrehen in vorgefertigte, also z.B. vorgebohrte, vorgegossene oder vorgestanzte Löcher in einem Werkstück, **dadurch gekennzeichnet,** daß die gewindefurchende Schraube (1) einen unrunden, z.B. trilobularen, mehreckigen oder nach Art eines Gleichdicks ausgeführten Querschnitt aufweist und mit einer zumindest einen Teil der Gewindeoberfläche (2) bedeckenden Klebstoffbeschichtung (5) versehen ist.

2. Schraube nach Anspruch 1, dadurch gekennzeichnet, daß die Klebstoffbeschichtung (5) streifenförmig achsparallel auf den Gewindebereich (2) aufgebracht ist.

3. Schraube nach Anspruch 2, dadurch gekennzeichnet, daß die Klebstoffbeschichtung (5) in mehreren, mit Abstand aufeinander folgenden, streifenförmigen, achsparallel verlaufenden Abschnitten aufgetragen ist.

4. Schraube nach Anspruch 1, dadurch gekennzeichnet, daß die Klebstoffbeschichtung (5) in Form eines ringförmigen Einzelabschnittes oder in Form mehrerer, in axialer Richtung mit Abstand aufeinander folgender Ringabschnitte auf den Gewindebereich aufgebracht ist.

5. Schraube nach Anspruch 1 und einem der vorhergehenden Ansprüche, dadurch gekennzeichnet, daß die Klebstoffbeschichtung (5) aus einem mikroverkapselten Klebstoff besteht.

## Claims

1. A thread-tapping screw for screwing into prefabricated, i.e., for example, prebored, precast or prepunched holes in a workpiece, characterised in that the thread-tapping screw (1) is of a cross-section which is non-circular, for example trilobular, polygonal or constant-diameter type, and is provided with an adhesive coating (5) covering at least part of the thread surface (2).

2. A screw according to Claim 1, characterised in that the adhesive coating (5) is applied in bands axially parallel to the threaded region (2).

3. A screw according to Claim 2, characterised in that the adhesive coating (5) is applied in a plurality of band-like, axially parallel extending portions following one another at a distance apart.

4. A screw according to Claim 1, characterised in that the adhesive coating (5) is applied to the threaded region in the form of an annular single portion or in the form of a plurality of annular portions following one another at distance apart.

5. A screw according to Claim 1 and any one of the preceding Claims, characterised in that the adhesive coating (5) consists of microencapsulated adhesive.

## Revendications

1. Vis autotaraudeuse pour montage dans des trous préexistants dans une pièce obtenus par exemple par perçage, coulée ou découpage, caractérisée en ce que la vis autotaraudeuse (1) présente une section non circulaire, par exemple trilobée, polygonale ou orbiforme et porte, sur au moins une partie de la surface du filetage (2) un revêtement (5)chargé d'un matériau adhésif.

2. Vis selon la revendication 1, caractérisée en ce que le revêtement adhésif (5) est déposé sur le filetage selon des bandes parallèles à l'axe.

3. Vis selon la revendication 2, caractérisée en ce que le revêtement adhésif (5) est réparti en plusieurs parties espacées successives en forme de bandes parallèles à l'axe.

4. Vis selon la revendication 1, caractérisée en ce que le revêtement adhésif (5) est disposé sur le filetage sous la forme d'une partie annulaire unique ou sous la forme de plusieurs parties annulaires successives espacées en direction axiale.

5. Vis selon la revendication 1 et une des revendications 2 à 4, caractérisée en ce que le revêtement adhésif (5) est constitué de microcapsules de matériau adhésif.
